# EUROPEAN PATENT APPLICATION

(11) **EP 1 477 987 A1**
(43) Date of publication of application: **17.11.2004**
(21) Application number: 03010729.6
(22) Date of filing: 14.05.2003
(51) Int. Cl.: G11B 27/32, G11B 27/28

(54) **Method for storing additional data relating to menu data**

(71) Applicant: Deutsche Thomson-Brandt GmbH, 78048 Villingen-Schwenningen (DE)
(72) Inventor: Li, Hui, 30419 Hannover (DE); Blawat, Meinolf, 30659 Hannover (DE); Klausberger, Wolfgang, 30559 Hannover (DE); Kochale, Axel, 31832 Springe (DE); Schiller, Harald, 30539 Hannover (DE)
(74) Representative: Rittner, Karsten, Dr.

(57) **Abstract**

A method for storing additional data (D0,...,D2) relating to menu data, particularly to thumbnail pictures, on optical media, e.g. Blu-ray discs, complies with the current standard for Blu-ray rewritable discs, which allows storage of content management information, e.g. thumbnail picture data (P), on dedicated locations on the disc. The method includes using relevant standardized files (TIDX, TDT) on the disc and relevant standardized parameters for accessing the data. In particular, the remaining part at the end of a data block (TNB_0,...,TNB_2) within the thumbnail data file (TDT) is used for storing additional data (D0,...,D2) relating to the corresponding thumbnail picture data (P). The additional data (D0,...,D2) can be used e.g. for further menu processing, or any form of content management.

## Description

### Field of the invention

This invention relates to a method for storing additional information, e.g. menu or thumbnail picture related information, on a Blu-Ray disc or other medium with comparable data storage structure.

### Background

Optical media are today's preferred solution for storing large amounts of data. Especially digital visual data like photos or movies require high storage capacity. For optical media, e.g. Digital Versatile Disc (DVD), several pictures, video and audio streams can be stored on a single medium. New storage technologies and formats for optical media in consumer electronics continue to be proposed and standardized, one of them being the so-called Blu-Ray disc technology. It offers smaller storage structures and therefore higher storage capacity than previous common optical discs.

With more content being stored on a medium, the problem of managing the content occurs, and is solved by various means of content management systems. Thus a quick overview of the contents stored on the medium may be given. Usually there are data for an electronic menu or index stored on the medium, which data control the menu e.g. being displayed on a screen. For visual data it is common to have a visual menu, containing still pictures, also called thumbnail pictures, and/or short video sequences which are generated from and linked to the AV data stored on the medium. These visual menu data are usually stored in a lossy format to reduce the amount of data and achieve faster access. The more content a medium holds, the more menu data are required, and the longer is the menu, and the menu access time. Further, it may be desirable to have enhanced menu possibilities, e.g. automatic menu processing, menu organization, or utilization of menu data for other purpose. Though for common menu purpose it is widely accepted that the thumbnail picture quality is reduced, it may be required for enhanced menu purpose that additional information about a thumbnail picture is available that can only be retrieved from the original detailed picture. Examples are statistical or other data like color histogram, luminance histogram, motion vectors etc.

Index data are often accessed, and frequently single items are added or deleted. In order to achieve quick access to the index, index data are often stored in a dedicated region of the medium, and in dedicated files.

Different formats and organization types are used for storage of menu data. For thumbnail pictures the coding format is usually either bitmap, which gives more details but higher amount of data, or JFIF (JPEG File Interchange Format), which is standardized by the JPEG organization (Joint Photographic Expert Group) and which suppresses details in the pictures but reduces the amount of data drastically, compared with bitmap. A new technology for optical storage media, utilizing the advantages offered by lasers with shorter wavelengths, is currently in the process of standardization, and is known as "Blu-Ray" disc technology.

Further it is a known method for audio-visual (AV) data storage media, e.g. common DVD, to use thumbnail picture data for further menu processing or content management methods, e.g. picture analysis for automatic thumbnail grouping or other automatic picture processing. For most picture processing methods it is necessary to have detailed statistical information about the pictures, e.g. color or luminance histogram. This detailed information is difficult to obtain from pictures that are stored in JFIF format, like thumbnail pictures according to the mentioned Blu-Ray specification, since the suppression of details means a reduction of information contents in the thumbnail picture. Neither allows today's Blu-Ray standard storage of additional thumbnail related data.

### Summary of the Invention

The present invention utilizes the method disclosed in claim 1 to solve the problem of storing additional menu related data, particularly data relating to thumbnail pictures, on media that store thumbnail picture data in data blocks having standardized size, like media complying with the Blu-Ray rewritable disc standard, or an enhanced version of it. Thus the invention offers an improvement to the standard. A storage medium according to the invention is disclosed in claim 7, and an apparatus that utilizes the method is disclosed in claim 9.

According to the invention, additional data sets associated to a thumbnail picture can be stored in the thumbnail data file, in a remainder of the same data block as the thumbnail picture data, e.g. tn_block in the case of Blu-ray, and a parameter can be introduced into the corresponding control file, e.g. thumbnail index file, representing the size of said data set.

Advantageous embodiments of the invention are disclosed in the dependent claims, the following description and the figure.

### Brief description of the drawing

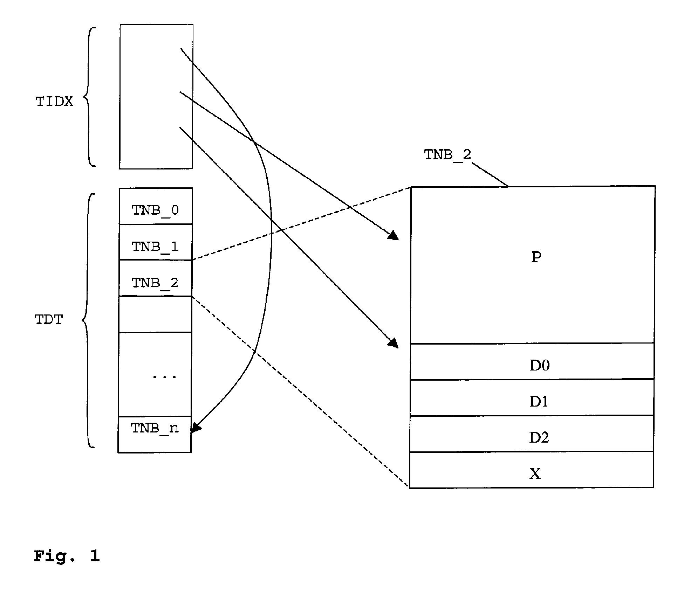

Exemplary embodiments of the invention are described with reference to an accompanying drawing, which shows in Fig.1 the structure of a thumbnail data file containing a number of thumbnail blocks, and the structure of a thumbnail block according to the invention.

### Detailed description of the invention

The standard for rewritable Blu-Ray discs, version 1.0 dated June 2002, defines that thumbnail pictures are stored in JPEG format in dedicated files, namely thumbnail index files with the extension "tidx", and thumbnail data files with the extension "tdt1" or "tdt2". Since the difference between "tdt1" and "tdt2" files is not relevant here, the extension "tdt" is used here for thumbnail data files, like in an older version of the above-mentioned Blu-Ray disc standard. An exemplary thumbnail index file TIDX together with its corresponding thumbnail data file TDT is shown in Fig.1.

Within the thumbnail data file TDT, the picture data are stored in blocks TNB_0,...,TNBn, being referred to as thumbnail blocks (tn_block), with one block per picture. This makes it easier to access single thumbnail pictures, e.g. for editing, or for adding or deleting pictures. The current version of the standard defines that the size of the tn_blocks is an integer multiple of 1024 bit, with all tn_blocks within a thumbnail data file having the same size. Since the picture data P are not necessarily a multiple of 1024 bit, there are usually a number of remaining bits X at the end of each thumbnail block that are currently not used. The tn_block addressing information for a thumbnail picture and other contained data can be calculated from the contents of the corresponding thumbnail index file.

According to the invention, any additional information related to the thumbnail pictures, such as e.g. detailed statistical information about the picture contents or a short text or tag referring to the picture, may be stored together with the thumbnail picture data on optical media which comply with the Blu-Ray disc standard, with only minor enhancements of today's version of said standard. Analogously, the disclosed method of storing additional data relating to menu data can be applied for all media that store menu data in blocks of standardized size. Advantageously this simplifies access to the additional data, and saves storage area since no extra data blocks need to be allocated for the additional data. Particularly, the invention proposes that the additional data referring to a thumbnail picture may be stored in the thumbnail data file, in the remaining part at the end of the tn_block corresponding to the thumbnail picture. The exemplary thumbnail data file TDT shown in Fig.1 contains several tn_blocks TNB_0,...,TNB_n, with the data structure within an exemplary tn_block TNB_2 also being shown. This tn_block TNB_2 contains thumbnail picture data P and additional data, being structured in data blocks D0,D1,D2, and a remaining part X that fills up the total size of the tn_block TNB_2 to be a multiple of 1024 bit. Further, Fig.1 shows a thumbnail index file TIDX relating to the thumbnail data file TDT. The thumbnail index file TIDX contains also the new parameters described in the following.

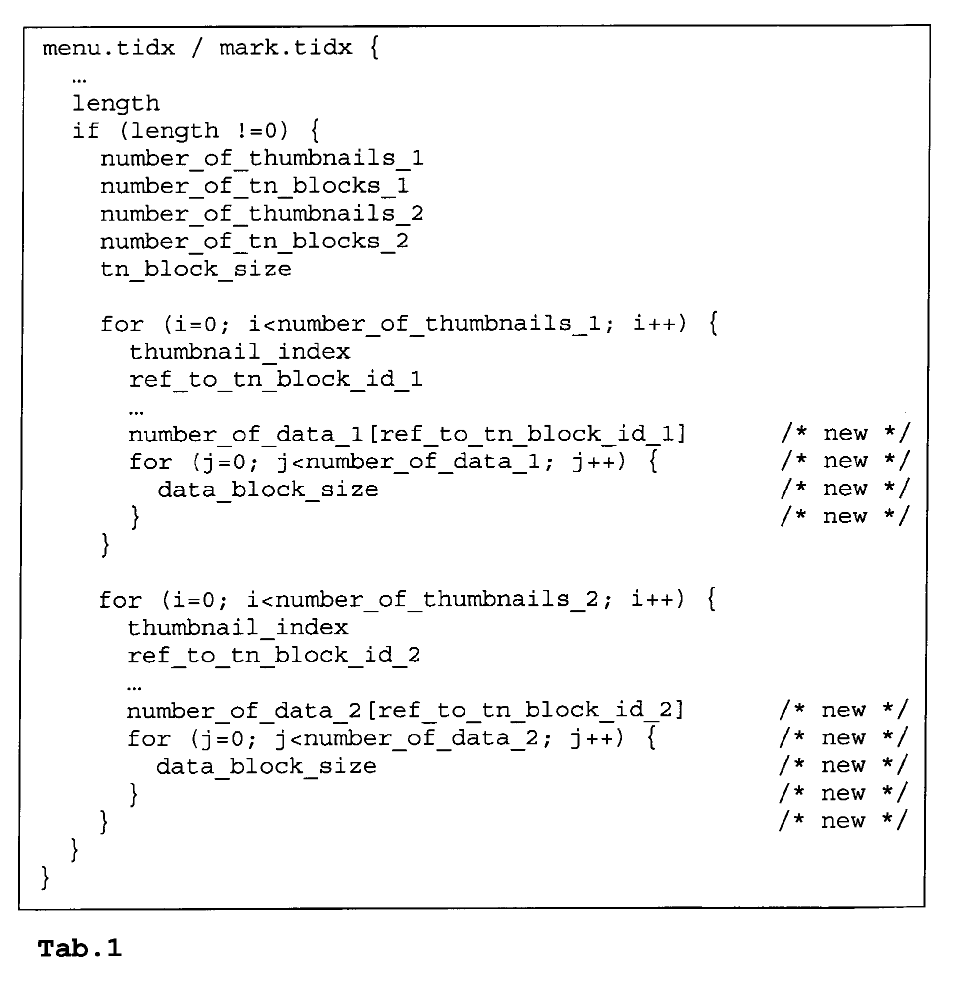

Tab.1 shows exemplarily the detailed structure of a thumbnail index file TIDX, and how an additional parameter called number_of_data for a thumbnail picture can be introduced into the thumbnail index file TIDX corresponding to the thumbnail data file TDT. Said parameter represents the number of data blocks of the additional data set. In Tab.1, the number_of_data_1 and number_of_data_2 refer to the "tdt1" and the "tdt2" file, respectively.

Tab.2 shows the structure of the thumbnail data file according to the invention. If no additional data is stored for a certain thumbnail picture, then the parameter number_of_data may be zero in one embodiment of the invention, or it may be missing completely in another embodiment. This second embodiment complies with today's version of the Blu-Ray disc standard.

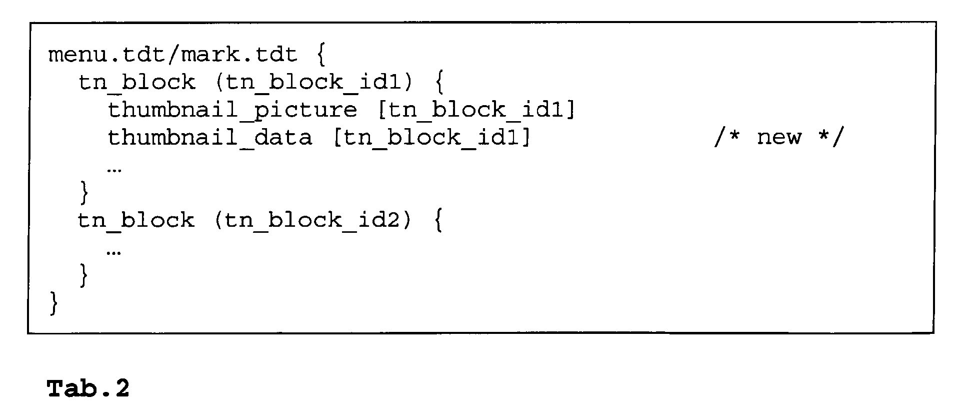

When an apparatus according to the invention is requested to read thumbnail related data, e.g. from a medium as disclosed in claim 7, it steps through the respective thumbnail index file listed in Tab.1. Only the relevant steps are described here, in an exemplary manner. In a first step the apparatus reads the parameter "length" giving the total number of stored thumbnail pictures. If said parameter is not zero, the apparatus reads four more parameters,
the first of them giving the number of thumbnails of a first type (*number_of_thumbnails_1*),
the second parameter giving the number of related thumbnail data blocks (*number_of_tn_blocks_1*), with the blocks having specified size,
the third parameter giving the number of thumbnails of a second type (*number_of_thumbnails_2*), and
the fourth parameter giving the number of related thumbnail data blocks (*number_of_tn_blocks_2*).

The difference between said first and second type are not relevant for the invention. Since the following procedure is executed equally for thumbnails of both said types, and may in future versions of the standard be extended to further types, the procedure is described only once here. A loop is executed for each thumbnail picture, using the previously read parameter *number_of_thumbnails.* The loop determines the picture data size and address location, so that the thumbnail picture data can be located for reading from the storage medium.

Now another parameter *number_of_data* is read, which refers to the current thumbnail picture and gives the amount of additional data associated with the current thumbnail picture. In one embodiment of the invention the amount of data may be specified in physical storage units like bits or bytes. In another embodiment of the invention it may be specified as a number of data blocks of specific size. The additional data associated with the current thumbnail picture are physically located after the related picture data, as shown in Tab.2.

Advantageously it is possible to use the additional thumbnail picture related data for automatic analysis of the thumbnail picture contents, which can be used as a basis for automatic content management systems, e.g. automatic feature extraction or automatic key frame clustering for segmentation of recorded AV data into logically coherent parts. The additional data may include statistical data, such as color or luminance histograms, weighted histograms, motion vectors calculated from a series of uncompressed pictures, but also high level content management information, such as frame number, links to other data, description text, date of recording etc. The statistical data may be generated from the uncompressed AV data, but if applicable it may as well be advantageous to store data generated from the compressed thumbnail picture data, e.g. to save calculation time.

A particular application taking benefit from the invention is a Visual Summary system containing e.g. a content-based video browser, providing means for quickly selecting video material of interest to the user from a database, and efficiently navigating inside video documents. Various functions of a Visual Summary system known for DVDs, such as key frame automatic clustering, can then also be applied to Blu-ray discs. The automatic clustering processing needs key frame feature data, which are created during key frame extraction, e.g. while recording, and can be stored on the disc by using the inventive method. Each key frame may be converted into a thumbnail picture, and its related feature data may be packed together with the thumbnail picture data, so that an Enhanced Thumbnail is generated and stored on the disc. It is usually more efficient to generate these feature data during compression and store them, e.g. on the Blu-ray disc, than to recalculate them. Therefore tools for the automatic production of visual summaries, as already being developed e.g. for DVD, may also be used for Blu-ray discs, being realized e.g. in the following steps: first segmenting video shots and extracting a key frame for each shot, second calculating key frame picture features, such as colour histogram, based on picture features to group together similar key frames by an automatic clustering process, and then selecting and classifying final subjective key frames. This may provide an automated method for representing a video by a restricted number of key frame pictures.

Key frame pictures generated by a Key Frame Extractor will usually be in bitmap format. They may be converted into JPEG format, in order to shrink them and store them as thumbnail pictures in the Blu-ray disc system, thus losing many image messages. To realize such Enhanced Thumbnails according to the invention, the syntax of menu.tidx, mark.tidx and tn_block are modified as described above. Compared with the corresponding syntax defined in the current Blu-ray disc specification, the enhanced syntax may preserve the current thumbnail picture structure, but insert extra bits for storing additional data for thumbnail pictures. According to the new syntax, each thumbnail picture can have zero to multiple additional data sets. In the case of the remaining data X not being sufficient for storing another data set, the size of a tn_block may also be enlarged by one increment, e.g. 1024 bit.

With the additional feature data of each thumbnail picture, a user may subjectively summarize video contents, based on the grouping results of thumbnails. Based on Enhanced Thumbnails, the automatic clustering method can be applied not only within each PlayList, but also between different PlayLists. This enables a user to browse all thumbnail pictures of a PlayList and a Clip-Info on a Blu-ray disc.

In principle, all kinds of data can be added as additional data to a thumbnail block. As a common example, the thumbnail picture is compressed using a lossy compression format, and the additional data set may comprise the lost information, or parts of it. Therefore it may also be advantageous to use the inventive method for pre-recorded media. As another example, a user may add to a thumbnail picture some brief text annotation, or other identification or classification data according to own criteria.

## Claims

1. A method for storing additional data (D0,...,D2) relating to menu item data (P) stored in a dedicated location of an optical storage medium, the menu item data (P) being stored in a data file (TDT),
**characterized in that**
- control data associated to said menu item data (P) are stored in an index file (TIDX);
- said menu item data (P) are stored within said data file (TDT) in blocks (TNB_0,...,TNB_n) of fixed size, or an integer multiple of a fixed size;
- said additional data (D0,...,D2) are stored in the same block (TNB_0,...,TNB_n) of said data file (TDT) as the corresponding menu item data (P); and
- said additional data are referred to from said index file (TIDX).

2. Method according to claim 1, wherein the reference in the index file (TIDX) pointing to the additional data (D0,...,D2) in the data file (TDT) contains the amount of menu item data (P), or the amount of additional data (D0,...,D2), or the amount of unused data (X) in the data file (TDT).

3. Method according to claim 1 or 2, wherein said data file (TDT) contains only data blocks (TNB_0,...,TNB_n).

4. Method according to any of claims 1-3, wherein said menu item data (P) contain picture data.

5. Method according to any of claims 1-5, wherein said menu item data (P) are in a compressed format, and said additional data (D0,...,D2) contains statistical data being generated from the same menu item data (P) in uncompressed format.

6. Method according to any of the previous claims, wherein the storage medium is rewritable.

7. Method according to any of the previous claims, wherein the optical storage medium complies with the Blu-ray Disc Rewritable Format standard.

8. An apparatus for storing or retrieving menu related data comprising menu item data (P) and additional data (D0,...,D2) relating to said menu item data (P) from an optical storage medium, **characterized in that** it comprises
- means for reading the menu related data from data blocks (TNB_0,...,TNB_n) of said medium, wherein the data blocks have a specified size, or an integer multiple of a specified size; and
- means for storing at least said additional data (D0,...,D2) relating to said menu item data (P) in the same data block of the medium (TNB_2) as the menu item data (P).

9. Apparatus according to claim 8, further comprising means for storing said menu item data (P) and said additional data (D0,...,D2) relating to said menu item data in the same data block of the medium (TNB_2), wherein said menu item data (P) are in a compressed format, and wherein said additional data (D0,...,D2) contain statistical data being generated from the same menu item data (P) in uncompressed format.
